# EUROPEAN PATENT APPLICATION

(11) **EP 2 874 439 A1**
(43) Date of publication of application: **20.05.2015**
(21) Application number: 13193310.3
(22) Date of filing: 18.11.2013
(51) Int. Cl.: H04W 40/20, H04W 40/02, H04W 84/18

(54) **Operating a user equipment in a wireless mesh radio network**

(71) Applicant: Sony Corporation, Tokyo 108-0075 (JP)
(72) Inventor: Agardh, Kåre, 257 32 Rydebäck (SE)
(74) Representative: Banzer, Hans-Jörg

(57) **Abstract**

Method for operating a user equipment (101) in a wireless mesh radio network (100). The wireless mesh radio network (100) comprises a plurality of neighboring nodes (102-104) arranged within a direct radio frequency communication range of the user equipment (101), and a destination node (109). Communication data is to be routed from the user equipment (101) to the destination node (109) through the wireless mesh radio network (100). According to the method, a location information of the user equipment (101) defining a geographic location at which the user equipment (101) is currently located is deter-mined. Furthermore, for each neighboring node (102-104) a corresponding location information defining a geographic location at which the corresponding neighboring node (102-104) is currently located is determined. Additionally, a location information of the destination node (109) is determined. Based on the determined location information of the user equipment (101), the destination node (109) and the neighboring nodes (102-104) one neighboring node (104) selected and the communication data to be routed from the user equipment (101) to the destination node (109) is transmitted to the selected neighboring node (104).

## Description

The present invention relates to a method for operating a user equipment in a wireless mesh radio network, especially to an improved routing method for routing data traffic through the wireless mesh radio network by utilizing location information of the user equipment and the nodes of the network. The present invention relates furthermore to a user equipment and a node for a wireless mesh radio network using the improved routing method.

### BACKGROUND OF THE INVENTION

Commonly used wireless networks, for example GSM or UMTS, use a cellular-based structure for providing data communication, in which the mobile user equipment communicates wirelessly with a base station which provides the routing of the data to and from the communication partners. However, in the evolution towards an increasing number of wireless communication device, so-called ad-hoc and peer-to-peer networks are increasingly important. For example, in the 3^{rd} Generation Partnership Project (3GPP) there are initiatives around proximity-based services, in which the direct connection between devices is key for both public safety and commercial services. These direct connections between devices, so-called device-to-device communications, may enable the connectivity, for example via the Inter-net, of 50 billion connected devices in year 2020. For realizing this, large efficient unmanaged ad-hoc networks consisting of many dynamic interconnected nodes are key enablers. However, direct communications between two devices, as opposite to infrastructure networks such as cellular 3G/4G or Wi-Fi assess point networks, have a number of limitations, for example with respect to transmission ranges. In order to reach a communication between two devices, either long range radio is needed which implies high power consumption, or methods for relaying the communication over a number of devices or nodes is needed.

One major existing relaying network type is the mesh network. In a mesh network, each device is connected with one or more other devices in an uncoordinated manner. Each device may comprise for example a user equipment, like a mobile phone, a mobile computer, a mobile navigation system, a tablet PC or a personal digital assistant, which may provide a routing or relaying functionality for forwarding data which does not pertain to the device. Data sent between two devices in such a network needs a way to find its destination device in an efficient way. Each data transfer between two devices may therefore include a number of jumps or hops through other connected devices. Therefore, the nodes or devices in the mesh network may collaborate to propagate the data in the network. Wireless mesh radio networks may rely on different technologies, for example on wireless local network (WLAN) technologies defines in several standards of the IEEE 802.11, or on device-to-device communication defined in wireless cellular telecommunication network standards, for example 3GPP/LTE. In 2011, IEEE has completed the 802.11s specification that will be important onwards as the only standardized robust mesh network. In 802.11s and other mesh networks there are algorithms specified that are used to route data from a source device to a destination device via zero or more relay nodes. However, the algorithms require trial and error to find out which nodes do perform a path towards the destination and more or less the whole network needs to be traversed to identify the shortest path in a recursive manner.

However, when traffic increases in the networks, more efficient data routing algorithms are needed. Historically, routing algorithms have been developed based on mathematical models to avoid loops and recursive methods to find an efficient way through the network. However, these algorithms do not take into account when a device is moving into the network or is moving out of the network, but realizes this only, when data routing fails and a new path is to be found. Furthermore, in these algorithms devices that are in the border region or having poor reception and therefore have high packet losses and lower throughput, have equal probability to be included in a data path as other devices. Therefore, there is a need to optimize the routing considering the physical nature of radio frequency propagation and moving devices in a wireless mesh network.

### SUMMARY OF THE INVENTION

According to the present invention, this object is achieved by a method for operating a user equipment in a wireless mesh radio network as defined in claim 1, a method for operating a node in a wireless mesh radio network as defined in claim 8, a user equipment for a wireless mesh radio network as defined in claim 13, and a node for a wireless mesh radio network as defined in claim 15. The dependent claims define preferred and advantageous embodiments of the invention.

According to a first aspect of the present invention, a method for operating a user equipment in a wireless mesh radio network is provided. The wireless mesh radio network comprises at least one neighboring node arranged within a direct radio frequency communication range of the user equipment. Furthermore, the wireless mesh radio network comprises a destination node. Communication data is to be routed from the user equipment to the destination node through the wireless mesh radio network. The user equipment may be configured to communicate directly with each of the neighboring nodes via a corresponding direct radio communication. Each node may comprise the functionality of a user equipment and the user equipment may act itself as a node for routing communication data from other user equipments and nodes. The user equipment may comprise for example a mobile device like a mobile telephone, a so-called smart phone, a mobile table computer or a mobile personal digital assistant. The direct radio communication between the user equipment and another neighboring user equipment or node may be accomplished by for example radio technologies according to wireless local area network standards, like IEEE 802.11, or according to a device-to-device communication as defined in radio frequency telecommunication networks, for example 3GPP. However, other direct radio frequency communication technologies may be used to facilitate setting up the direct radio communication in the wireless mesh radio network, for example Bluetooth or ZigBee. In the wireless mesh radio network each node may not only receive and send its own data, but may also serve as a relay for other nodes and other equipments. Therefore, in wireless mesh radio networks each node may cooperate with other nodes to propagate the data in the network. Data to be transmitted from a source device to a destination device is propagated in the wireless mesh radio network by hopping from node to node until the destination device is reached. According to the method, a location information of the user equipment is determined. The location information of the user equipment defines a geographic location at which the user equipment is currently located. The current location of the user equipment may be determined by positioning capabilities provided in the user equipment, including for example cellular and Wi-Fi triangulation, satellite-based positioning in connection with for example a global navigation satellite system (GNSS) like for example GPS, or a positioning from short range beacons known from Bluetooth and indoor location methods. Furthermore, according to the method, for each neighboring node a corresponding location information which defines a geographic location at which the corresponding neighboring node is currently located, is determined. Furthermore, a location information of the destination node to which communication data is be routed, is determined. The location information of the destination node defines a geographic location at which the destination node is currently located. Based on the determined location information of the user equipment, the location information of the destination node and the location information of the one or more neighboring nodes, one neighboring is selected by the user equipment and data to be routed from the user equipments to the destination node is transmitted directly to the selected neighboring node. In other words, according to the method described above, position information of the user equipment (source node), one or more forwarding nodes and the destination node is used for finding an optimized route through the mesh network. The physical distance between two nodes (for example the user equipment and a neighboring node or two arbitrary nodes in the mesh network) will correspond to the radio link distance between the nodes. In many scenarios, the nodes or devices will not move drastically within short or medium time spans and therefore, once the location information has been determined, communication data may be routed efficiently through the mesh network. Furthermore, the location information of each device, i.e. the user equipment, each neighboring node and the destination node, may be updated in regular intervals or continuously such that an efficient routing may be accomplished.

According to an embodiment, the corresponding location information of each neighboring node may be determined at the user equipment by receiving the corresponding location information from the corresponding neighboring node as part of communication data transmitted directly from the corresponding neighboring node to the user equipment. The neighboring node may be provided with a positioning system, for example based on cellular or Wi-Fi triangulation, a global navigation satellite system or a short range beacon system as described above, and may provide the determined positioning information in connection with user data or protocol data to the user equipment. As a lot of mobile handheld devices, like mobile phone or digital personal assistants, are already provided with positioning capabilities as described, the location information of the neighboring node can be provided without additional effort by just adding the location information to protocol data units exchanged between the node and the user equipment.

According to another embodiment, for determining the location information of the destination node at the user equipment, the user equipment receives the location information of the destination node as part of communication data routed from the destination node to the user equipment through the wireless mesh radio network. The destination node may determine its location as described above using for example a global navigation satellite system. In certain or each data packet transmitted from the destination node to the user equipment, the location information of the destination node may be provided such that the location information of the destination node is advertized to each intermediate node on the way to the user equipment and to the user equipment itself. Thus, once a data packet has been routed back from the destination node to the user equipment, every intermediate node involved in routing as well as the user equipment is aware of the current location information of the destination node and therefore, an efficient routing between the user equipment and the destination node may be accomplished.

According to a further embodiment, the location information of the user equipment is transmitted to each neighboring node as part of communication data transmitted directly from the user equipment to each neighboring node. In other words, the user equipment or any node in the mesh radio network advertizes its location information via a direct device-to-device communication to its neighboring nodes. Furthermore, each communication data transmitted from a source node (for example the user equipment) to a destination node may comprise location information of the source node as well as location information of the destination node. Thus, each node through which the communication data is forwarded gains location information of the source node and the destination node. With each communication data routed through the mesh radio network, location data of the nodes of the mesh radio network is advertized to other nodes in the mesh radio network. Based on the location information, a straightforward and efficient routing can be performed in the mesh radio network. Furthermore, a distance of each link between two nodes can be determined and thus links having a longer distance and therefore higher packet losses or lower throughput may be avoided to be used in routing. Thus, routing reliability may be increased. A fallback to classic routing mechanisms may be provided if a transmission fails due to very fast position changes of a node or when a node disappears. Furthermore, classic routing mechanisms may be used as long as location information has not been advertized sufficiently within the mesh radio network.

According to another embodiment, a location change of the user equipment is determined. The location change defines a change of the geographic location of the user equipment between a previous geographic location and the current geographic location of the user equipment. The location change of the user equipment is compared with a predetermined location change threshold and based on this comparison the location information of the user equipment is transmitted to each neighboring node as part of communication data transmitted directly from the user equipment to each neighboring node. In other words, the user equipment advertizes its location information to each neighboring node only when the location of the user equipment has changed significantly. Thus, the amount of device-to-device communication between the user equipment and the neighboring nodes may be reduced when the user equipment is not moving. The predetermined location change threshold can be selected appropriately, and may comprise for example a value of a few meters, for example 10, 50 or 100 meters.

According to a further embodiment, the location information of the user equipment is transmitted to the destination node together with the communication data to be routed from the user equipment to the destination node. As described above, by transmitting the current location information of the user equipment together with data communication to the destination node, the location information is advertized to each node in the wireless mesh radio network which forwards the communication data as well as to the destination node.

According to yet another embodiment, the user equipment transmits the location information of the destination node together with communication data routed from the user equipment to the destination node. By this, the location information of the destination node is advertized to each intermediate node of the wireless mesh radio network which forwards the communication data from the user equipment to the destination node. Thus, the location information of the destination node is advertized within the wireless mesh radio network.

According to a further aspect of the present invention, a method for operating a node in a wireless mesh radio network is provided. The wireless mesh radio network comprises at least one neighboring node arranged within a direct radio frequency communication range of the node. In other words, the node can communicate with the at least one neighboring node via a direct device-to-device communication without using a base station or other infrastructural components. Communication data from a user equipment arranged in the wireless mesh radio network is to be routed from the user equipment to a destination node which is also arranged in the wireless mesh radio network, through the wireless mesh radio network. In other words, the node is a forwarding node in the wireless mesh radio network for forwarding communication data from the user equipment to the destination node.

According to the method, a location information of the node is determined which defines a geographic location at which the node is currently located. Furthermore, for each neighboring node a corresponding location information is determined which defines a geographic location at which the corresponding neighboring node is currently located. Additionally, a location information of the destination node is determined which defines a geographic location at which the destination node is currently located. Communication data which is to be routed from the user equipment to the destination node is received at the node and the node selects one neighboring node based on the determined location information of the node itself, the determined location information of the destination node and the determined location information of each of the neighboring nodes. The received communication data is transmitted or forwarded directly to the selected neighboring node. In other words, the node is configured to forward communication data received from the user equipment based on location information of the user equipment, the destination node, its own location and the location of neighboring nodes. Thus, an efficient routing of communication data can be performed.

According to an embodiment, the corresponding location information from the corresponding neighboring nodes is received as part of communication data transmitted directly from the corresponding neighboring nodes to the node. In other words, via a direct device-to-device communication the node is receiving location information from neighboring nodes. Thus, location information can be easily and efficiently advertized from the neighboring nodes to the node.

According to another embodiment, the location information of the destination node is determined by extracting the location information from communication data routed between the destination node and the user equipment. When communication data between the user equipment and the destination node includes the location information of the destination node, this information can be extracted from the node during forwarding the communication data. The extracted location information can be used by the node for determining a neighboring node to which communication data has to be forwarded in the direction of the destination node.

According to a further embodiment, the location information of the node is transmitted to each neighboring node. For example, the location information can be transmitted as part of communication data including protocol data or user data transmitted directly via a device-to-device communication from the node to the corresponding neighboring node. Advertizing its location information to the neighboring nodes enables the neighboring nodes to perform the above-described position-based routing of communication data through the wireless mesh radio network.

According to a further embodiment, a location change of the node is determined which defines a change of the geographic location of the node between a previous geographic location of the node and the current geographic location of the node. The location change of the node is compared with a predetermined location change threshold and the location information of the node is sent to each neighboring node depending on the comparison. The predetermined location change threshold can be defined such that the location information of the node is only retransmitted to neighboring nodes when the node has moved significantly, for example more than 10 meters, preferably more than 50 meters or preferably more than 100 meters.

According to a further aspect of the present invention, a user equipment for a wireless mesh radio network is provided. The wireless mesh radio network comprises at least one neighboring node arranged within a direct radio frequency communication range of the user equipment. In other words, a device-to-device communication can be set up between the user equipment and the neighboring nodes. The wireless mesh radio network comprises furthermore a destination node. Communication data is to be routed from the user equipment to the destination node through the wireless mesh radio network. The user equipment comprises a wireless radio interface for wireless communication with the neighboring nodes, and a processing device. The processing device is configured to determine a location information of the user equipment which defines a geographic location at which the user equipment is currently located. The processing device is furthermore configured to determine for each neighboring node a corresponding location information which indicates a geographic location at which the corresponding neighboring node is currently located. Additionally, a location information of the destination node is determined which indicated a geographic location at which the destination node is currently located. The location information may comprise for example an absolute global location information as it is provided for example by global navigation satellite systems. Based on the determined location information of the user equipment, the location information of the destination node and the location information of each of the neighboring nodes, one neighboring node is selected for forwarding communication data to the destination node, and the communication data to be routed from the user equipment to the destination node is transmitted directly to the selected neighboring node. This selection of one of the neighboring nodes may be performed for example by a geographic evaluation selecting the nearest node on a line between the user equipment and the destination node. Furthermore, the user equipment may be configured to perform and carry out the above-described method and comprises therefore also the above-described advantages.

According to another aspect of the present invention, a node for a wireless mesh radio network is provided. The wireless mesh radio network comprises at least one neighboring node arranged within a direct radio frequency communication range of the node. Furthermore, a user equipment and a destination node are arranged in the wireless mesh radio network and communication data is be routed from the user equipment to the destination node through the wireless mesh radio network, which means that the communication data has to be forwarded by nodes of the wireless mesh radio network from the user equipment to the destination node. The node comprises a wireless radio interface for wireless communication with the neighboring nodes, and a processing device. The wireless communication between the node and its neighboring nodes is a direct wireless communication using for example a device-to-device communication defined in 3GPP standards. The processing device is configured to determine a location information of the node indicating a geographic location at which the node is currently located. Furthermore, the processing device determines for each neighboring node a corresponding location information indicating the geographic location at which the corresponding neighboring node is currently located. Additionally, the processing device determined a location information of the destination node defining a geographic location at which the destination node is currently located. Communication data to be routed from the user equipment to the destination node is received by the processing device, and based on the determined location information of the node, the determined location information of the destination node and the location information of the neighboring nodes, one neighboring node is selected and the received communication data is transmitted directly to the selected neighboring node. Therefore, the node is configured to perform the above-described method and comprises therefore the above-described advantages.

According to an embodiment, the node comprises the above-described user equipment. In other words, each node of the wireless mesh radio network may play the role of the above-described user equipment, destination node, (forwarding) node, or neighboring node depending on its location and a demand from which node to which node communication data is to be transmitted.

Although specific features described in the above summary and the following detailed description are described in connection with specific embodiments and aspects of the present invention, it should be understood that the features of the embodiments and aspects may be combined with each other unless specifically noted otherwise. Especially, the above-described user equipment and the above-described node types (source node, forwarding node, neighboring node, destination node) may be combined within a single device which may serve in the wireless mesh radio network at the same time as a terminal device for a user (user equipment or destination node) and a routing device (forwarding node, neighboring node) supporting the routing within the wireless mesh radio network.

### BRIEF DESCRIPTION OF THE DRAWINGS

The present invention will now be described in more detail with reference to the accompanying drawings.
Fig. 1 shows a wireless mesh radio network comprising a plurality of user equipments and nodes according to embodiments of the present invention.
Fig. 2 shows a user equipment according to an embodiment of the present invention.
Fig. 3 shows a flowchart comprising method steps according to an embodiment of the present invention.

### DETAILED DESCRIPTION OF PREFFERED EMBODIMENTS

In the following, exemplary embodiments of the invention will be described in more detail. It is to be understood that the features of the various exemplary embodiments described herein may be combined with each other unless specifically noted otherwise. Same reference signs in the various drawings refer to similar or identical components. Any coupling between components or devices shown in the figures may be a direct or indirect coupling unless specifically noted otherwise.

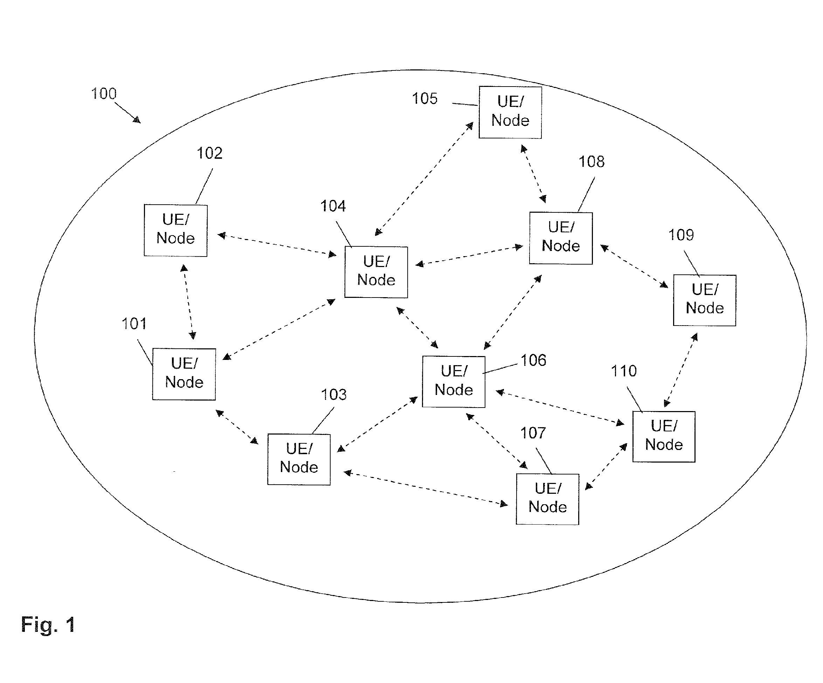

Fig. 1 shows schematically an example of a wireless mesh radio network 100. The wireless mesh radio network 100 comprises a plurality of nodes 101-110. Each node 101-110 may comprise for example a terminal device, a so-called user equipment (UE), like a mobile phone, a mobile computer, a tablet PC or a personal digital assistant PDA. Each node 101-110 comprises a radio interface for communicating with neighboring nodes within a range of the radio frequency communication provided by the radio interface. In Fig. 1 each direct communication between two nodes via a direct radio frequency communication is indicated by a dashed arrow. As an example, node 101 may directly communicate via corresponding radio frequency links with nodes 102, 103 and 104. As another example, node 106 may directly communicate via corresponding direct radio links with nodes 103, 104, 107, 108 and 110. The nodes 101-110 may comprise mobile devices which may be moved around geographically, for example when the corresponding device is carried around by a user using the device. Therefore, direct radio frequency links between two nodes are not permanent, but may vary with the position of the nodes. For example, when node 101 is located near node 109, the distance between nodes 101 and 102 will be too large for establishing or maintaining the direct radio frequency link between these nodes and there will be a new direct radio frequency link between nodes 101 and 109. Therefore, routing communication data between two nodes within the wireless mesh radio network 100 has to be adapted continuously when the nodes 101-110 are moving.

A node of the wireless mesh radio network 100, for example node 101, may be required to transmit communication data between the node 101 and another node in the wireless mesh radio network, for example node 109. Communication data between the node 101 and the destination node 109 has to be routed along the radio frequency links between the nodes until the destination is reached. For example, data communication may be transmitted from the node 101 to the node 109 via nodes 104 and 108. As can be seen, in the wireless mesh radio network 100 each node must not only receive and transmit its own data, but also serves as a relay or router for other nodes. In typical routing techniques, data packets or messages of communication data are propagated along a path by hopping from node to node until the destination node is reached. In wireless mesh radio networks comprising mobile nodes, direct radio frequency links between certain nodes may become available or may become unavailable when the nodes are moving. Therefore, the routing in the wireless mesh radio network 100 has to be adapted permanently to the current structure or arrangement of the nodes. Wireless mesh radio networks which support mobile devices are so-called mobile ad-hoc networks (MANET). Each node in a mobile ad-hoc network is free to move independently in any direction and will therefore change its radio links to other nodes more or less frequently. However, each node must forward traffic unrelated to its own use and is therefore a router. The direct radio link between two nodes may be established for example according to wireless local area standards, for example according to IEEE 802.11, or may be established via a so-called device-to-device communication provided by mobile cellular communication standards like 3GPP.

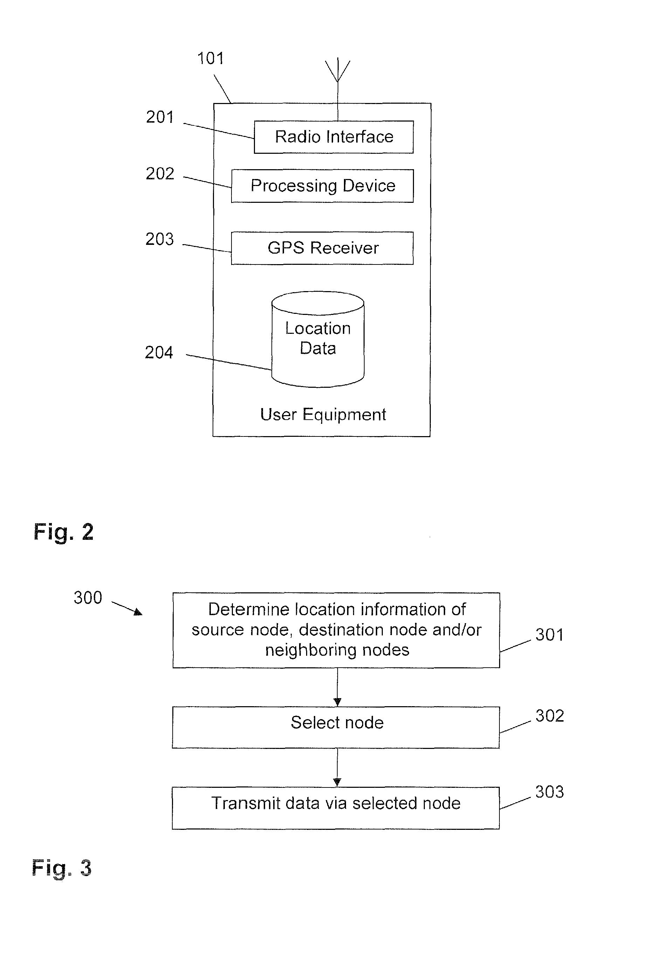

In the following, a routing utilizing location information of the nodes 101-110 will be described in more detail. Utilizing location information requires the nodes to have position capabilities. Commonly used mobile devices like mobile phones or personal digital assistants provide positioning capabilities, including for example cellular and Wi-Fi triangulation, satellite-based positioning like GPS or positioning from short range beacons via for example Bluetooth. Fig. 2 shows an exemplary embodiment of the user equipment 101 which may be used as a user equipment or node in the wireless mesh radio network 100. The user equipment 101 comprises a wireless radio interface 201, a processing device 202, a GPS receiver 203 and a memory 204 used by the processing device 202 for storing, beside other information, location data of other nodes of the wireless mesh radio network 100 as will be described in the following in connection with Fig. 3.

Fig. 3 shows a method 300 comprising method steps 301-303 which may be performed by the processing device 202 of the user equipment 101. Assuming the user equipment 101 is required to transmit communication data to a destination user equipment via the wireless mesh radio network 100, for example to destination node 109. The user equipment 101 may set up direct radio frequency links to neighboring nodes 102, 103 and 104. In step 301 the processing device 202 determines the current location of the user equipment 101, the current location of the neighboring nodes 102, 103 and 104, and the current location of the destination node 109. The current location of the user equipment 101 may be determined using the GPS receiver 203 or using for example cellular triangulation when the user equipment 101 is arranged within a cellular communication network. The current location of the neighboring nodes 102-104 may be determined by receiving corresponding location information from each of the nodes 102-104. Each of the nodes 102-104 may determine its corresponding location using for example GPS receivers provided in the nodes 102-104. The current location of the destination node 109 may be determined by receiving a location information from the node 109 as part of previous communication data received from the node 109. The determined location information of the node 101, the neighboring nodes 102-104 and the destination 109 may be stored as location data in the memory 204. Next, in step 302, the processing device 202 selects one neighboring node from the neighboring nodes 102-104 based on the determined location information of the user equipment 101, the determined location information of the destination node 109, and the determined location information of each of the neighboring nodes 102-104. For example, the user equipment 101 may select neighboring node 104, because this node 104 is located closest to a straight geometric line between the user equipment 101 and the destination node 109. Communication data to be transmitted from the user equipment 101 to the destination node 109 are then transmitted to the selected neighboring node 104 in step 303.

The neighboring node 104 will receive the communication data from the user equipment 101 and will act in the same way as the user equipment 101 as described in connection with Fig. 3 above to forward the communication data in the direction of the destination node 109. In detail, node 104 will determine its own geographic location as well as the geographic location of its neighboring nodes 101, 102, 105, 106 and 108. Additionally, node 104 will determine the location of the destination node 109. Location information of the neighboring nodes 101, 102, 105, 106 and 108 may be received via direct radio frequency communications or device-to-device communications indicated by the dashed arrows in Fig. 1. The current location of the destination node 109 may be determined from the communication data received from the user equipment 101 which may include the geographic location of the destination node 109. Based on this location information, the node 104 may select node 108 and forward the communication data received from node 101 to node 108. Node 104 may select node 108 because node 108 lies closest to a direct geometric line between the nodes 104 and 109.

Node 108 receives the communication data which is to be transmitted from the user equipment 101 to the node 109. User equipment 108 acts in the same way as node 104 and forwards the communication data to node 109 where the communication data reach its destination.

To sum up, the above-described method for data routing comprises the following. First, each node regularly detects its own position. Low power positioning is preferred, for example techniques using Bluetooth, Wi-Fi and cellular triangulation may be preferred over GPS. If the own position changes noticeably, data is sent to each direct neighboring node (so-called direct peer node) with the new position information. In this way, each device has knowledge on the geographical position of all direct neighboring nodes or devices. When a node sends for the first time data to another node in the network which is not a direct peer, it normally has to use classic routing methods (for example flooding or trial and error) for finding a data path to the destination since the position of the destination node is not known, yet. However, in this data transmission the position of the source node is already included. In the acknowledgement response, the receiving node also includes its position information so that both nodes know each others positions. As two devices generally will have a (semi-) persistent relation (for at least some time), classic routing methods will not have to be used very frequently. Next, in each following transmission, data is sent to the direct peer closest to the geographical direction of the receiving node, which may be easily calculated based on the own position, the receiver's position and the position of all direct neighboring nodes. Nodes that relay data use the same algorithm to send data in the direction of the receiving node.

As can be seem from the above description, each node in the wireless mesh radio network may act as a source, destination or forwarding node. Each node may have to ability to find its own geographical position. Furthermore, communication data, for example protocol data, user data packets and acknowledge packets, which are transmitted within the wireless mesh radio network may comprise geographical positions of the source node and the destination node. As a fallback, classic routing algorithms may be implemented for setting up a first data path and if a transmission fails due to very fast position changes or when a node disappears.

## Claims

1. A method for operating a user equipment in a wireless mesh radio network, wherein the wireless mesh radio network (100) comprises at least one neighboring node (102-104) arranged within a direct radio frequency communication range of the user equipment (101) and a destination node (109), wherein communication data is to be routed from the user equipment (101) to the destination node (109) through the wireless mesh radio network (100), the method comprising:
- determining a location information of the user equipment (101), the location information defining a geographic location at which the user equipment (101) is currently located,
- determining for each neighboring node (102-104) a corresponding location information, the location information defining a geographic location at which the corresponding neighboring node (102-104) is currently located,
- determining a location information of the destination node (109), the location information defining a geographic location at which the destination node (109) is currently located,
- selecting one neighboring node (104) from the at least one neighboring node (102-104) based on the determined location information of the user equipment (101), the location information of the destination node (109) and the location information of each of the at least one neighboring node (102-104), and
- transmitting communication data to be routed from the user equipment (101) to the destination node (109) directly to the selected neighboring node (104).

2. The method according to claim 1, wherein determining for each neighboring node (102-104) the corresponding location information comprises:
- receiving the corresponding location information from the corresponding neighboring node (102-104) as part of communication data transmitted directly from the corresponding neighboring node (102-104) to the user equipment (101).

3. The method according to claim 1 or 2, wherein determining the location information of the destination node (109) comprises:
- receiving the location information of the destination node (109) as part of communication data routed from the destination node (109) to the user equipment (101) through the wireless mesh radio network (100).

4. The method according to any one of the preceding claims, further comprising:
- transmitting the location information of the user equipment (101) to each neighboring node (102-104) as part of communication data transmitted directly from the user equipment (101) to each neighboring node (102-104).

5. The method according to any one of the preceding claims, further comprising:
- determining a location change of the user equipment (101), the location change defining a change of the geographic location of the user equipment (101) between a previous geographic location of the user equipment (101) and the current geographic location of the user equipment (101),
- comparing the location change of the user equipment (101) with a predetermined location change threshold, and
- transmitting the location information of the user equipment (101) to each neighboring node (102-104) as part of communication data transmitted directly from the user equipment (101) to each neighboring node (102-104) depending on the comparison of the location change of the user equipment (101) with the predetermined location change threshold.

6. The method according to any one of the preceding claims, further comprising:
- transmitting the location information of the user equipment (101) to the destination node (109) together with the communication data to be routed from the user equipment (101) to the destination node (109).

7. The method according to any one of the preceding claims, further comprising:
- transmitting from the user equipment (101) to the destination node (109) the location information of the destination node (109) together with the communication data to be routed from the user equipment (101) to the destination node (109).

8. A method for operating a node in a wireless mesh radio network, wherein the wireless mesh radio network (100) comprises at least one neighboring node (101, 102, 105, 106, 108) arranged within a direct radio frequency communication range of the node (104), wherein communication data from a user equipment (101) arranged in the wireless mesh radio network (100) is to be routed from the user equipment (101) to a destination node (109) arranged in the wireless mesh radio network (100) through the wireless mesh radio network (100), the method comprising:
- determining a location information of the node (104), the location information defining a geographic location at which the node (104) is currently located,
- determining for each neighboring node (101, 102, 105, 106, 108) a corresponding location information, the location information defining a geographic location at which the corresponding neighboring node (101, 102, 105, 106, 108) is currently located,
- determining a location information of the destination node (109), the location information defining a geographic location at which the destination node (109) is currently located,
- receiving communication data to be routed from the user equipment (101) to the destination node (109),
- selecting one neighboring node (108) from the at least one neighboring node (101, 102, 105, 106, 108) based on the determined location information of the node (104), the determined location information of the destination node (109) and the location information of each of the at least one neighboring node (101, 102, 105, 106, 108), and
- transmitting the received communication data directly to the selected neighboring node (108).

9. The method according to claim 8, wherein determining for each neighboring node (101, 102, 105, 106, 108) the corresponding location information comprises:
- receiving the corresponding location information from the corresponding neighboring node (101, 102, 105, 106, 108) as part of communication data transmitted directly from the corresponding neighboring node (101, 102, 105, 106, 108) to the node (104).

10. The method according to claim 8 or 9, wherein determining the location information of the destination node (109) comprises:
- extracting the location information of the destination node (109) from communication data routed between the destination node (109) and the user equipment (101).

11. The method according to any one of claims 8-10, further comprising:
- transmitting the location information of the node (104) to each neighboring node (101, 102, 105, 106, 108) as part of communication data transmitted directly from the node (104) to each neighboring node (101, 102, 105, 106, 108).

12. The method according to any one of claims 8-11, further comprising:
- determining a location change of the node (104), the location change defining a change of the geographic location of the node (104) between a previous geographic location of the node (104) and the current geographic location of the node (104),
- comparing the location change of the node (104) with a predetermined location change threshold, and
- transmitting the location information of the node (104) to each neighboring node (101, 102, 105, 106, 108) as part of communication data transmitted directly from the node (104) to each neighboring node (101, 102, 105, 106, 108) depending on the comparison of the location change of the node (104) with the predetermined location change threshold .

13. A user equipment for a wireless mesh radio network, wherein the wireless mesh radio network (100) comprises at least one neighboring node (102-104) arranged within a direct radio frequency communication range of the user equipment (101) and a destination node (109), wherein communication data is to be routed from the user equipment (101) to the destination node (109) through the wireless mesh radio network (100), the user equipment (101) comprising:
- a wireless radio interface (201) for wireless communication with the at least one neighboring node (102-104), and
- a processing device (202), configured
to determine a location information of the user equipment (101), the location information defining a geographic location at which the user equipment (101) is currently located,
to determine for each neighboring node (102-104) a corresponding location information, the location information defining a geographic location at which the corresponding neighboring node (102-104) is currently located,
to determine a location information of the destination node (109), the location information defining a geographic location at which the destination node (109) is currently located,
to select one neighboring node (104) from the at least one neighboring node (102-104) based on the determined location information of the user equipment (101), the determined location information of the destination node (109) and the location information of each of the at least one neighboring node (102-104), and
to transmit communication data to be routed from the user equipment (101) to the destination node (109) directly to the selected neighboring node (104).

14. The user equipment according to claim 13, wherein the user equipment (101) is configured to carry out the method of any one of claims 1-7.

15. A node for a wireless mesh radio network, wherein the wireless mesh radio network (100) comprises at least one neighboring node (101, 102, 105, 106, 108) arranged within a direct radio frequency communication range of the node (104), wherein communication data from a user equipment (101) arranged in the wireless mesh radio network (100) is to be routed from the user equipment (101) to a destination node (109) arranged in the wireless mesh radio network (100) through the wireless mesh radio network (100), the node (104) comprising:
- a wireless radio interface (201) for wireless communication with the at least one neighboring node (101, 102, 105, 106, 108), and
- a processing device (202), configured
to determine a location information of the node (104), the location information defining a geographic location at which the node (104) is currently located,
to determine for each neighboring node (101, 102, 105, 106, 108) a corresponding location information, the location information defining a geographic location at which the corresponding neighboring node (101, 102, 105, 106, 108) is currently located,
to determine a location information of the destination node (109), the location information defining a geographic location at which the destination node (109) is currently located,
to receive communication data to be routed from the user equipment (101) to the destination node (109),
to select one neighboring node (108) from the at least one neighboring node (101, 102, 105, 106, 108) based on the determined location information of the node (104), the determined location information of the destination node (109) and the location information of each of the at least one neighboring node (101, 102, 105, 106, 108), and
to transmitting the received communication data directly to the selected neighboring node (108).

16. The node according to claim 15, comprising the user equipment (101) according to claim 13 or claim 14.

17. The node according to claim 15 or claim 16, wherein the node (104) is configured to carry out the method of any one of claims 8-12.
